# EUROPEAN PATENT APPLICATION

(11) **EP 1 059 777 A1**
(43) Date of publication of application: **13.12.2000**
(21) Application number: 99961370.6
(22) Date of filing: 24.12.1999
(51) Int. Cl.: H04L 12/56

(54) **COMMUNICATION CONTROL SYSTEM, COMMUNICATION METHOD, SERVER DEVICE, TERMINAL, RELAY DEVICE, AND COMMUNICATION SYSTEM**

(30) Priority: 28.12.1998 JP 37462798
(71) Applicant: NTT DoCoMo, Inc., Tokyo 100-6150 (JP)
(72) Inventor: KURITA, Shigetaka, Omiya-shi, Saitama 330-0038 (JP); HIROSE, Norihiko, Minato-ku, Tokyo 107-0062 (JP); NAKATSUCHI, Masaharu, Yokohama-shi, Kanagawa 221-0861 (JP); SASAKI, Keizaburo, Yokosuka-shi, Kanagawa 238-0006 (JP)
(74) Representative: HOFFMANN - EITLE
(86) International application number: PCT/JP99/07281
(87) International publication number: WO 00/41364

(57) **Abstract**

The present invention has the purpose of providing technology capable of efficiently transmitting data when performing data communications between a mobile station and a server apparatus.

In the present invention, a simplified protocol TL is employed on the transport layer instead of TCP/IP as the communication protocol on the radio-oriented interval between an MS (Mobile Station) 1 and a GWS (GateWay Server) 5 which relays data communications between the MS 1 and CPS (Content Provider Server). Additionally, the headers of the packets for data transfer according to TL are made up of about 10 bytes. By doing so, the traffic between the MS 1 and GWS 5 is decreased and the overhead is reduced in comparison to when TCP/IP is employed, thus improving the response of the data communications. As a result, the user can comfortably access contents provided by the CPS 8 on the internet via a radio-oriented interval which has a low data transmission capacity in comparison to a wire-oriented interval using an MS 1 which has insufficient data processing power to employ TCP/IP.

## Description

### BACKGROUND OF THE INVENTION

### TECHNICAL FIELD

The present invention relates to a communication control method, communication method, server apparatus, terminal device, relay apparatus and communication system suitable for use in an information distributing system providing information from at least one server apparatus to a plurality of user terminals via a network.

### BACKGROUND ART

The internet provides content providers with an environment capable of providing content to users around the world directly and at a low cost, and provides users an environment enabling content from around the world to be used in a standard user interface. Along with the popularization of the internet, recent years have seen active development, provision and use of content providing services making use of the internet, and the vast amount of content for various uses on the internet is increasing daily. As a result, the ease of access to the internet has become an important consideration in the development of content distributing services.

With the spread of the internet, transparent system architectures employing internet technologies in LANs (Local Area Networks) have become commonplace. Here, one basic constituent of "internet technologies" is the communication protocol, specifically TCP/IP (Transmission Control Protocol / Internet Protocol). That is, a very large number of networks currently employ the TCP/IP.

Data communications according to TCP/IP are based on an OSI layer model (OSI Reference Model) wherein, on the transmission side, data is relayed by adding headers for each layer onto actual data from a higher layer to a lower layer, and packets are transmitted to the reception side. On the other hand, at the reception side, the transmitted packets are handed from the lowest physical layer in order to the highest layer. During this procedure, in each layer, packets supplied from a lower layer are separated into data and a header corresponding to that layer, the content of this header is analyzed, and the data is handed to a higher layer.

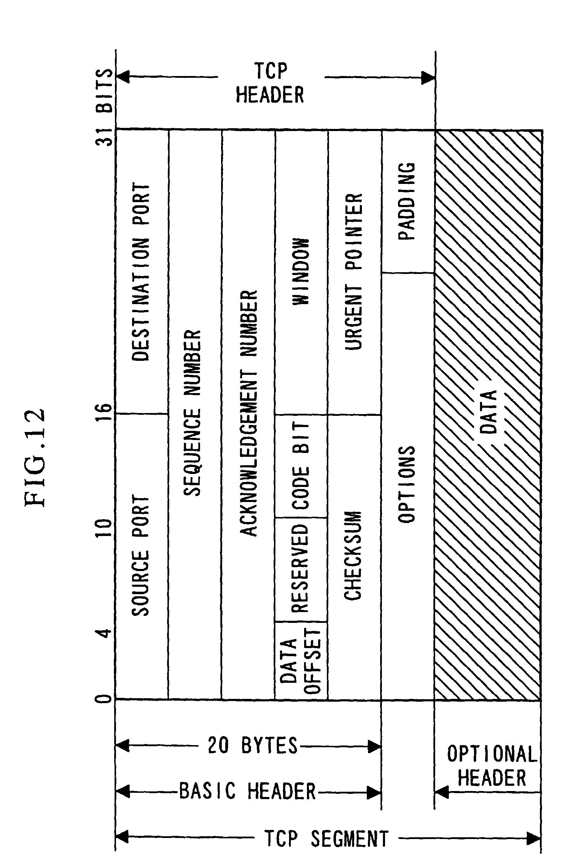

Here, the packet structure obtained by the processing in each layer on the transmission side shall be explained with reference to Figs. 12-14. However, it shall here be assumed that, as in general dial-up connections, the transmission side and reception side are connected one-to-one using a PPP (Point-to-Point Protocol).

Fig. 12 shows the structure of a TCP segment which is a packet that has undergone processing in the fourth layer. This TCP segment is composed of a TCP header and data. Here, the TCP header is composed of a basic header (20 bytes) and an optional header. The basic header includes information such as a source port number, destination port number, sequence number, acknowledgment number, code bits and window size. Additionally, the data is composed of actual data and a header added by means of processing of an upper layer equal to or higher than the session layer.

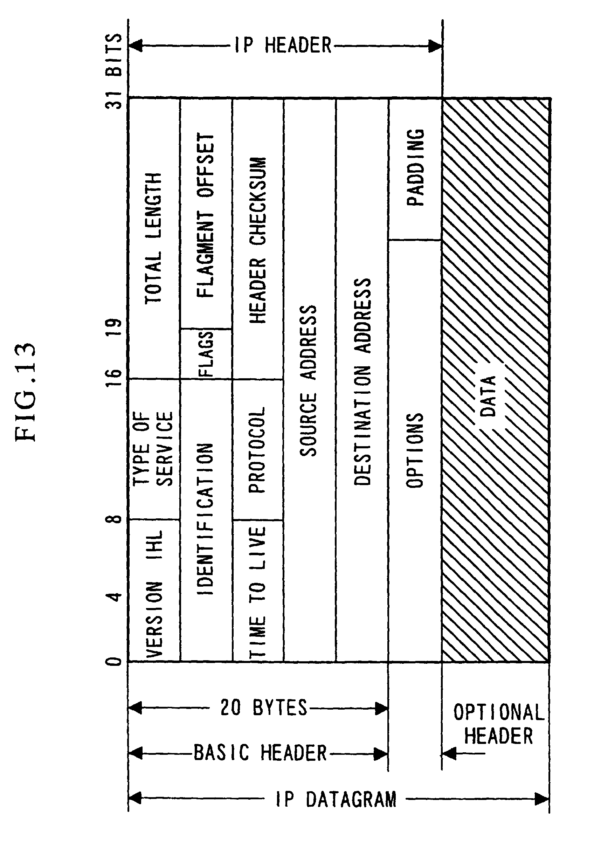

Fig. 13 shows the structure of an IP datagram which is a packet that has undergone processing in the third layer. This IP datagram is composed of an IP header and data. Here, the IP header is composed of a basic header (20 bytes) and an optional header. The basic header includes information such as a source IP address, a destination IP address, a service type, a packet length, and a protocol number. Additionally, the data is composed of actual data and a header of an upper layer (such as TCP, UDP (User Datagram Protocol) or ICMP (Internet Control Message Protocol)) including at least one layer equal to or higher than the transport layer.

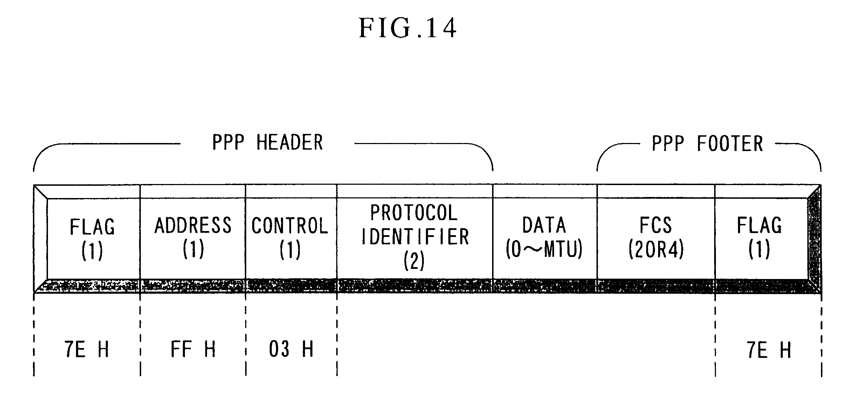

Fig. 14 shows the structure of a PPP frame which is a packet that has undergone the processing of the second layer. The numbers in parentheses in the drawing are given in units of bytes. This PPP frame consists of a PPP header (5 bytes), data, and a PPP footer (3 or 5 bytes). Here, the PPP header is composed of various information such as a flag, address, control, packet protocol identifier (LCP (Link Control Protocol)), IPCP (Internet Protocol Control Protocol), IP or IPX (Internetwork Packet Exchange)). Additionally, the data is composed of actual data and a header (including the above-mentioned TCP header and IP header) added by processing at a layer including at least one layer equal to or higher than the network layer. The PPP footer is composed of an FCS (Frame Check Sequence) and a flag. The MTU indicated in the drawing refers to the maximum transmission unit.

As described above, on the transmission side, the actual data to be transmitted is processed by procedures corresponding to each layer in the OSI layer model from the highest layer to the lowest layer, so that a header corresponding to the processing of each layer is sequentially added to the actual data.

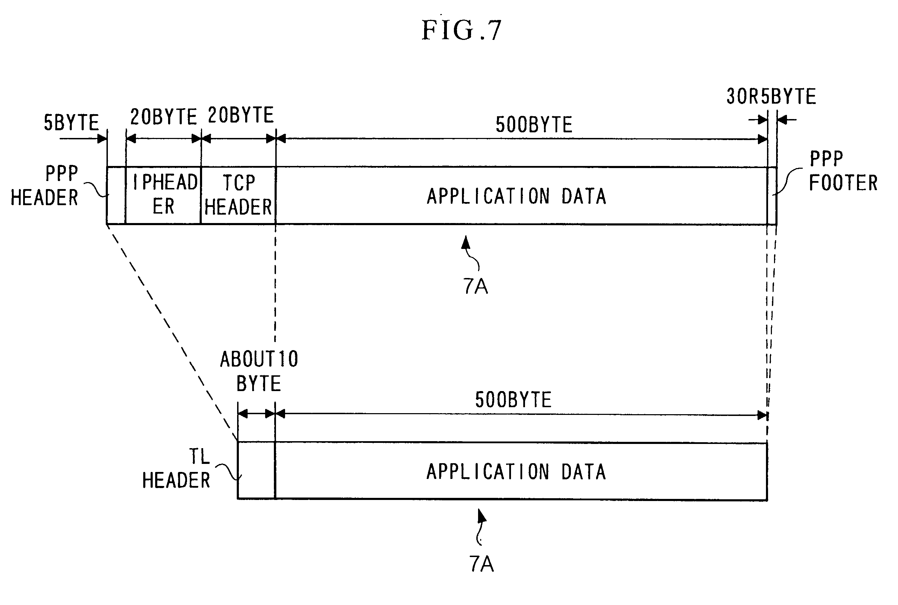

In Fig. 7, 7A is a packet that has undergone all of these processes on the transmission side and finally transmitted, such that, as shown in the drawing, the packet 7A has a header composed of a 5-byte PPP header, a 20-byte IP header and a 20-byte TCP header for a header with a total of 45 bytes added to the head of the application data if it is assumed that there are no optional headers, and a 3- or 5-byte footer added to the tail of the application data. The size of the application data is, for example, 500 bytes and can be expanded to a maximum of 1460 bytes.

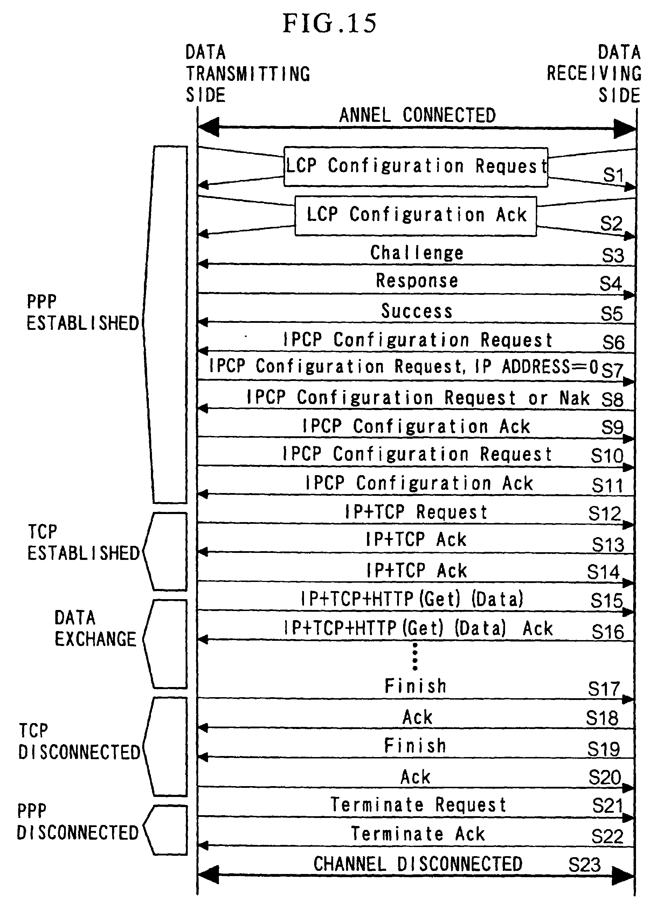

Next, the operating sequence for the case of performing packet communications according to TCP/IP shall be explained with reference to Fig. 15.

First, a message requesting set up of the LCP (LCP set up request) is sent from the data transmission side to the data reception side or from the data reception side to the data transmission side (S1). Next, an acknowledgment response message (LCP Set Up Ack) with respect to the LCP set up request is sent from the party receiving the LCP set up request to the other side (S2).

Subsequently, a Challenge Message for performing identification at the other side is sent from the data reception side (S3), and upon receipt of this on the data transmission side, a response message is sent out (S4). Then, a Success Message to the effect that the identification on the other side has succeeded is sent out from the data reception side to the data transmission side (S5).

Once this sequence of operations is completed, an IPCP set up request message is sent from the data reception side to the data transmission side (S6). Furthermore, an IPCP set up request message is sent from the data transmission side to the data reception side (S7).

Then, an IPCP set up request message or a negative response message (Nak) is sent from the data reception side to the data transmission side (S8). Upon receiving this, an acknowledgment response message with respect to the IPCP set up request (IPCP Set Up Ack) is sent from the data transmission side (S9).

Then, this time an IPCP set up request message is sent from the data transmission side to the data reception side (S10). Upon receiving this, an acknowledgment response message with respect to this IPCP set up request is sent from the data reception side (S11).

In this way, a PPP link is established between the data transmission side and the data reception side.

Next, a message (IP + TCP Request) requesting establishment of an IP data link and establishment of a TCP connection is sent from the data transmission side to the data reception side (S12). When an acknowledgment response message with respect to this message is sent from the data reception side (S13), the data transmission side upon receiving this sends out an acknowledgment response message to the effect that this acknowledgment response message has been received (S14).

In this way, a TCP connection is established between the data transmission side and the data reception side, and the transmission and reception of actual data is initiated as described below.

First, when packet data is transmitted from the data transmission side by means of HTTP (HyperText Transfer Protocol) (S15), the data reception side, upon receiving this, sends out an acknowledgment response message (S16). Then, in accordance with the size of the data being transmitted, the operations of steps S15 and S16, i.e. the operations of transmitting the packets and sending back to the data transmission source an acknowledgment response message to the effect that the packets have been received without problems are repeatedly performed, and the transmission of the packet data is ultimately completed (S17).

When a message to the effect that the transmission of the packet data has been completed is sent out from the data transmission side, the data reception side which has received this sends out an acknowledgment response message (S18). Then, this time a message to the effect that the reception of data has been completed is sent out from the data reception side, upon receipt of which the data transmission side sends out an acknowledgment response message. In this way, the TCP session is terminated.

Next, in disconnecting the PPP link, a message requesting termination of the PPP link (Terminate Request) is sent out from the data transmission side (S21). Upon receiving this, an acknowledgment response message is sent from the data reception side (S22).

In this way, the TCP link is first disconnected, and upon disconnection of the PPP link, the channel is cut off (S23) and the overall operation is completed.

In recent years, mobile communications have spread widely, and mobile data communications using mobile terminals should also see a rise in popularity. In the field of mobile data communications, it has become possible for a user to access the internet using a mobile terminal, and the provision of user-friendly internet access services for users has been desired. However, when providing internet access services using packet communications according to TCP/IP as described above, the problems mentioned below arise, making them as difficult to handle as mobile stations (portable telephones), and mobile terminals capable of readily accessing the internet did not exist.

First, with TCP/IP, as described above, the header of a packet is added by the layer and encapsulated, as a result of which the overall header size becomes extraordinarily large, and particularly when the actual data size is small, the relative header size becomes large. For example, when transferring about 500 bytes of data during mobile communications, the header size comes to about ten percent of the data size, and there are fields among the information contained in the header which are left absolutely unused in actuality.

Next, there is a problem in that the number of signals exchanged between the data transmission side and reception side is extremely large in the operating sequences during establishment of connections prior to actually transmitting the data. In the example shown in Fig. 15, a total of 14 steps from step S1 to S14 are required. Consequently, as the number of users accessing the network increases, the traffic increases dramatically and the data transfer rate drops.

Additionally, since the user is charged for the operations (steps S1-S14) prior to data transmission and reception, the economic burden on the user side becomes large.

Although these problems also occur in connections to the internet via fixed networks, they are especially serious problems in mobile communications wherein the data transmission ability is low in comparison to communications via fixed networks.

Additionally, since the TCP/IP is too heavy, it makes the mobile terminals having the ability to rapidly process the TCP/IP larger, heavier, and more expensive than the mobile station, when installing devices with the ability to process data to the level of mobile stations. Currently, the large, heavy and expensive mobile terminals which simply integrate a portable computer with a mobile station are received well only in small markets. In contrast, mobile stations are designed with portability, operability and ease of obtainment in mind, and the form and price of mobile stations are believed to be already well-received in an extremely broad market due to their general usefulness and high degree of popularity. Additionally, as mentioned above, various types of content capable of responding to the needs of various users already exist on the internet, and due to the steady increase in the amount of content even now, devices which are capable of being accepted by various users are desired as devices for accessing the internet. Keeping these matters in mind, there is little probability that services for accessing the internet using mobile terminals having the ability to rapidly process TCP/IP will be well-received in a wide market, even without taking into consideration the problem of data transmission ability in mobile communications.

Of course, one might consider having the content providing side develop content which is customized to the data processing power of mobile stations or the data transmission ability of mobile communications, but this type of development of customized content requires a heavy burden of the content providing side, and it is predicted that only a small amount of content with uses that are restricted as compared to the internet will be able to be provided to the user. That is, it is believed that this type of experiment would only be well-received in a small market.

From the above description, it is believed that the foundation of mobile data distribution is in the combination of mobile stations with the internet, and in order to achieve this combination, it is necessary to develop efficient communication technologies which enable users to stresslessly use content from the internet using mobile stations.

### SUMMARY OF THE INVENTION

The present invention has been made in view of the above-mentioned problems, and has the object of providing a communication control method, communication method, server apparatus, terminal device, relay apparatus and communication system capable of efficiently performing data communications even when the data processing ability and transmission ability are not high such as in mobile stations.

In order to achieve the above purpose, a communication control method recited in claim 1 is a communication control method in a relay apparatus for relaying data communications between a server apparatus and a user terminal, comprising a step of receiving a packet containing a message requesting establishment of a connection with the server apparatus and an identification number for the connection sent from the user terminal according to a first communication protocol which is a protocol; a step of transmitting a packet containing an acknowledgment response message that the packet has been received to the user terminal according to the first communication protocol, and establishing a connection between the server apparatus and itself according to a second communication protocol; a step of receiving a packet containing a data transfer request message transmitted from the user terminal to the server apparatus according to the first communication protocol, and transmitting a packet containing this data transfer request message to the server apparatus according to the second communication protocol; and a step of receiving data transmitted from the server apparatus according to the second communication protocol and transmitting a packet containing this data to the user terminal according to the first communication protocol. Here, the first communication protocol is simpler than the second communication protocol.

According to this communication control method, a conversion is made between a communication protocol with a server apparatus and a communication protocol with a user terminal which is simpler than this communication protocol when relaying client/server type data communications between a user terminal and a server apparatus. Consequently, according to this communication control method, at least one of the following is achieved on the user terminal side: a reduction of the header in the packets, a reduction of number of signals exchanged, and a reduction of processing at the user terminal, thereby enabling the load on the user terminal side to be lightened. In particular, since much of the content exchanged over the internet is text data and in the transmission of text data according to TCP/IP, the proportion of actual data in the transmitted packets is low, so that when considering connections to the internet, the reduction of the headers in the packets is extremely effective.

Additionally, a communication control method recited in claim 2 is a communication control method in a relay apparatus for relaying data communications between a server apparatus and a user terminal, comprising a step of receiving a packet containing a message requesting establishment of a connection to the server apparatus, an identification number for the connection and a data transfer request message for the server apparatus transmitted from the user terminal according to a first communication protocol; a step of transmitting a packet containing an acknowledgment response message that the packet has been received to the user terminal according to the first communication protocol, establishing a connection between the server apparatus and itself according to a second communication protocol, and transmitting a packet containing the data transfer request message to the server apparatus; and a step of receiving data transmitted from the server apparatus according to the second communication protocol and transmitting a packet containing this data to the user terminal according to the first communication protocol. Here, the first communication protocol is simpler than the second communication protocol.

According to this communication control method, it is possible to include a connection establishment request to the server apparatus and a data transfer request in a single signal from the user terminal to the relay apparatus. As a result, according to this communication control method, the traffic between the user terminal and relay apparatus can be reduced and data transfer requests can be sent out without waiting for acknowledgment response messages from the relay apparatus at the user terminal, in addition to the effects of the invention recited in claim 1.

A communication control method recited in claim 3 is a communication control method according to claim 1 or 2, wherein the number of signals used in establishing the connection between the user terminal and the relay apparatus according to the first communication protocol is less than the number of signals used in establishing the connection between the relay apparatus and the server apparatus according to the second communication protocol.

According to this communication control method, it is possible to reliably reduce the number of signals exchanged by the user terminal when establishing a connection, in addition to the effects due to the invention recited in claim 1 or 2.

A communication control method recited in claim 4 is a communication control method according to claim 1 or 2, wherein a communication interval between the user terminal and the relay apparatus is composed of a radio-oriented interval, and a communication interval between the relay apparatus and the server apparatus is composed of a wire-oriented interval.

According to this communication control method, communications by a communication protocol simpler than the communication protocol in a wired interval are performed in a radio interval which generally has a lower data transmission capacity than the wired interval. Therefore, according to this communication control method, the effect of being able to achieve communications suited to the data transmission capabilities of each interval is obtained in addition to the effects according to the invention recited in claim 1 or 2.

A communication method recited in claim 5 is a communication method for performing data communications between a server apparatus and a user terminal, wherein a communication control procedure in an upper layer containing a transport layer in the data communications comprises a first step of transmitting a first packet containing a message requesting establishment of a connection and an identification number for the connection from the user terminal to the server apparatus; a second step of transmitting a second packet containing an acknowledgment response message that this first packet has been received from the server apparatus to the user terminal; and a third step of transmitting a third packet containing actual data to the user terminal by designating the identification number from the server apparatus after the connection has been established between the user terminal and the server apparatus.

According to this communication method, a connection is established between the user terminal and server apparatus by a communication control procedure of an upper layer containing a transport layer, and the transmission of packets containing actual data is performed through this connection. Consequently, according to this communication method, at least one of the following is achieved on the user terminal side: a reduction of the header in the packets, a reduction of number of signals exchanged and a reduction of processing, thereby enabling the load on the user terminal side to be lightened.

Here, the reduction of the load on the user terminal side shall be explained in detail.

For example, a case where the user terminal and server apparatus commence communications using TCP/IP and PPP shall be assumed. In this case, there are the following problems.
1. Since the communication protocols of each layer are for general use, the proportion of actual data contained in the transmitted data is extremely small due to encapsulating in the layers.
2. Since establishment procedures are performed for each layer when establishing a connection, a large number of signals must be exchanged, thus increasing traffic and causing a great load on the user terminal.
3. At the user terminal, data encapsulating and decapsulating procedures are performed over multiple stages, thus causing a great load on the user terminal.

In contrast, by transmitting packets containing actual data through connections established by the communication control procedures of the upper layers containing the transport layer as in this communication method, it is possible to resolve at least one of the above problems.

Additionally, a communication method recited in claim 6 is a communication method for performing data communications between a user terminal and a relay apparatus for relaying data communications between the user terminal and a server apparatus, wherein communication control procedure in an upper layer containing a transport layer in the data communications comprises a first step of transmitting a first packet containing a message requesting establishment of a connection and an identification number for the connection from the user terminal to the relay apparatus; a second step of transmitting a second packet containing an acknowledgment response message that this first packet has been received from the relay apparatus to the user terminal; and a third step of transmitting a third packet containing actual data supplied to the relay apparatus according to a predetermined protocol from the server apparatus to the user terminal by designating the identification number after the connection has been established between the user terminal and the relay apparatus.

According to this communication method, a connection is established between the user terminal and relay apparatus by communication control procedures of upper layers including the transport layer, and packets containing actual data from the server apparatus are transmitted from the relay apparatus to the user terminal through this connection. Consequently, according to this communication method, the same effects as those of the invention recited in claim 5 are obtained. Additionally, according to this communication method, the connection is established between the user terminal and the relay apparatus, thereby shortening the time until an acknowledgment response message is received at the user terminal in comparison to the case where one is established between the user terminal and server apparatus.

Also, a communication method recited in claim 7 is a communication method according to claim 5, wherein in the first step, the user terminal transmits data size information indicating the maximum size of data that it is capable of receiving at once to the server apparatus; and the server apparatus obtains the maximum size from the data size information which has been received, and divides the actual data for transmission to the user terminal if the size of the third packet exceeds the maximum size.

According to this communication method, it is possible to avoid situations where the server apparatus sends the user terminal packets of a size which cannot be received at once by the user terminal, in addition to the effects due to the invention recited in claim 5.

Furthermore, a communication method recited in claim 8 is a communication method according to claim 6, wherein in the first step, the user terminal transmits data size information indicating the maximum size of data that it is capable of receiving at once to the relay apparatus; and the relay apparatus obtains the maximum size from the data size information which has been received, and divides the actual data for transmission to the user terminal if the size of the third packet exceeds the maximum size.

According to this communication method, it is possible to avoid situations where the relay apparatus sends the user terminal packets of a size which cannot be received at once by the user terminal, in addition to the effects due to the invention recited in claim 6.

A server apparatus recited in claim 9 is a server apparatus for performing data communications with a user terminal, comprising communication control means for performing communication control at an upper layer level containing a transport layer when performing the data communications; the communication control means comprising means for receiving a first packet containing a message requesting establishment of a connection and an identification number for the connection transmitted from the user terminal; means for transmitting a second packet containing an acknowledgment response message that this first packet has been received to the user terminal; and means for transmitting a third packet containing actual data to the user terminal by designating the identification number after the connection has been established with the user terminal.

According to this server apparatus, communication control is performed at an upper layer level containing the transport layer. With this communication control, a connection is established between the server apparatus and the user terminal, and packets containing actual data are transmitted from the server apparatus to the user terminal via this connection. Consequently, this server apparatus is able to obtain the same effects as the effects due to the invention recited in claim 5.

A relay apparatus recited in claim 10 is a relay apparatus for relaying data communications between a server apparatus and a user terminal, comprising communication control means for performing communication control at an upper layer level containing a transport layer when performing the data communications; the communication control means comprising means for receiving a first packet containing a message requesting establishment of a connection and an identification number for the connection transmitted from the user terminal; means for transmitting to the user terminal a second packet containing an acknowledgment response message that this first packet has been received; and means for transmitting a third packet containing actual data supplied from the server apparatus to the relay apparatus according to a predetermined protocol to the user terminal by designating the identification number after the connection has been established between the user terminal and itself.

According to this relay apparatus, communication control is performed at the upper layer level containing the transport layer. With this communication control, a connection is established between the relay apparatus and the user terminal, and packets containing actual data from the server apparatus are transmitted from the relay apparatus to the user terminal through this connection. Consequently, this relay apparatus is able to obtain the same effects as the effects due to the invention recited in claim 6.

Additionally, a relay apparatus recited in claim 11 is a relay apparatus for relaying data communications between a server apparatus and a user terminal, comprising means for receiving a packet containing a message requesting establishment of a connection with the server apparatus and an identification number for the connection transmitted from the user terminal according to a first communication protocol; means for transmitting a packet containing an acknowledgment response message that the packet has been received to the user terminal according to the first communication protocol, and establishing a connection between the server apparatus and itself according to a second communication protocol; means for receiving a packet containing a data transfer request message transmitted from the user terminal to the server apparatus according to the first communication protocol, and transmitting a packet containing this data transfer request message to the server apparatus according to the second communication protocol; and means for receiving data transmitted from the server apparatus according to the second communication protocol and transmitting a packet containing this data to the user terminal according to the first communication protocol; wherein the first communication protocol is simpler than the second communication protocol.

According to this relay apparatus, a conversion is made between a communication protocol with a server apparatus and a communication protocol with a user terminal which is simpler than this communication protocol when relaying client/server type data communications between a user terminal and a server apparatus. Consequently, this relay apparatus able to obtain the same effects as the invention recited in claim 1.

Furthermore, a relay apparatus recited in claim 12 is a relay apparatus for relaying data communications between a server apparatus and a user terminal, comprising means for receiving a packet containing a message requesting establishment of a connection to the server apparatus, an identification number for the connection and a data transfer request message for the server apparatus transmitted from the user terminal according to a first communication protocol; means for transmitting a packet containing an acknowledgment response message that the packet has been received to the user terminal according to the first communication protocol, establishing a connection between the server apparatus and itself according to a second communication protocol, and transmitting a packet containing the data transfer request message to the server apparatus; and means for receiving data transmitted from the server apparatus according to the second communication protocol and transmitting a packet containing this data to the user terminal according to the first communication protocol; wherein the first communication protocol is simpler than the second communication protocol.

According to this relay apparatus, it is possible to include a connection establishment request to the server apparatus and a data transfer request in a single signal from the user terminal to the relay apparatus. Therefore, this relay apparatus is capable of obtaining the same effects as the effects of the invention recited in claim 2.

A relay apparatus recited in claim 13 is a relay apparatus according claim 11 or 12, wherein the number of signals used in establishing the connection between the user terminal and the relay apparatus according to the first communication protocol is less than the number of signals used in establishing the connection between the relay apparatus and the server apparatus according to the second communication protocol.

According to this relay apparatus, the number of signals exchanged at the user terminal when establishing a connection can be reliably reduced in addition to the effects of the invention recited in claim 11 or 12. A relay apparatus recited in claim 14 is a relay apparatus according to any one of claims 10-12, wherein a communication interval between the user terminal and the relay apparatus is composed of a radio-oriented interval, and a communication interval between the relay apparatus and the server apparatus is composed of a wire-oriented interval.

According to this relay apparatus, the communication procedures in a radio interval which generally has a lower data transmission capacity than a wired interval is reduced to less than the communication processes in the wired interval, Consequently, according to this relay apparatus, the effect of being able to achieve communications suited to the data transmission capabilities of each interval is obtained in addition to the effects according to any one of claims 10-12.
A communication system recited in claim 15 is characterized in that a user terminal and a server apparatus are connected via a relay apparatus according to any one of claims 10-12.

According to this communication system, the same effects as the effects of any one of claims 10-12 can be obtained.

A terminal device recited in claim 16 is a terminal device for performing data communications with a server apparatus, comprising communication control means for performing communication control on an upper layer level containing a transport layer when performing the data communications; the communication control means comprising means for transmitting a first packet containing a message requesting establishment of a connection and an identification number for the connection; means for receiving a second packet containing an acknowledgment response message that the first packet has been received transmitted from the server apparatus; and means for receiving a third packet containing actual data transmitted from the server apparatus by designating the identification number after the connection has been established with the server apparatus.

According to this terminal device, communication control is performed on the upper layer level containing the transport layer. With this communication control, a connection is established between the server apparatus and the terminal device, and packets containing actual data are transmitted from the server apparatus to the terminal device through this connection. Therefore, this terminal device is able to obtain the same effects as the invention recited in claim 5.

The terminal device recited in claim 17 is a terminal device for performing data communications with a server apparatus via a relay apparatus for managing a connection with the terminal device, comprising communication control means for performing communication control on an upper layer level containing a transport layer when performing the data communications; the communication control means comprising means for transmitting a first packet containing a message requesting establishment of a connection with the relay apparatus and an identification number for the connection; means for receiving a second packet containing an acknowledgment response message that the first packet has been received transmitted from the relay apparatus; and means for receiving a third packet containing actual data supplied from the server apparatus to the relay apparatus according to a predetermined protocol and transmitted from the relay apparatus by designating the identification number after the connection has been established between the relay apparatus and itself.

According to this terminal device, communication control is performed on the upper layer level containing the transport layer. With this communication control, a connection is established between the relay apparatus and the terminal device, and packets containing actual data from the server apparatus are transmitted to the terminal device through this connection. Therefore, this terminal device is able to obtain the same effects as the invention recited in claim 6.

The terminal device recited in claim 18 is a terminal device for performing data communications with a server apparatus via a relay apparatus for managing a connection with the terminal device, comprising means for transmitting a packet containing a message requesting establishment of a connection with the server apparatus and an identification number for the connection according to a first communication protocol; means for receiving a packet containing an acknowledgment response message that the packet has been received transmitted from the relay apparatus according to the first communication protocol; means for transmitting a packet containing a data transfer request message to the server apparatus according to the first communication protocol; and means for receiving according to the first communication protocol a packet containing actual data supplied from the server apparatus to the relay apparatus according to a second communication protocol in response to the data transfer request message. Here, the first communication protocol is simpler than the second communication protocol.

According to this terminal device, a conversion is made at the relay apparatus between a communication protocol with a server apparatus and a communication protocol with a terminal device which is simpler than this communication protocol when relaying client/server type data communications between a terminal device and a server apparatus. Therefore, this terminal device is able to obtain the same effects as the invention recited in claim 1.

A terminal device recited in claim 19 is a terminal device for performing data communications with a server apparatus via a relay apparatus for managing a connection with the terminal device, comprising means for transmitting according to a first communication protocol a packet containing a message requesting establishment of a connection with the server apparatus, an identification number for the connection and a data transfer request message for the server apparatus; means for receiving a packet containing an acknowledgment response message that this packet has been received transmitted from the relay apparatus according to the first communication protocol; and means for receiving according to the first communication protocol a packet containing actual data supplied from the server apparatus to the relay apparatus according to a second communication protocol in response to the data transfer request message. Here, the first communication protocol is simpler than the second communication protocol.

According to this terminal device, it is possible to include a connection establishment request to the server apparatus and a data transfer request in a single signal from the user terminal to the relay apparatus. Therefore, this terminal device is able to obtain the same effects as the invention recited in claim 2.

A terminal device recited in claim 20 is a terminal device according to claim 18 or 19, wherein the number of signals used in establishing the connection between the user terminal and the relay apparatus according to the first communication protocol is less than the number of signals used in establishing the connection between the relay apparatus and the server apparatus according to the second communication protocol.

According to this terminal device, it is possible to reliably reduce the number of signals exchanged when establishing a connection in addition to the effects of the invention recited in claim 18 or 19.

A terminal device recited in claim 21 is a terminal device according to any one of claims 17-19, wherein a communication interval between the user terminal and the relay apparatus is composed of a radio-oriented interval, and a communication interval between the relay apparatus and the server apparatus is composed of a wire-oriented interval.

According to this terminal device, the communications procedures in a radio interval which generally has a lower data transmission capacity than a wired interval are reduced to less than the communication procedures in the wired interval. Therefore, according to this terminal device, it is possible to achieve communications suited to the data transmission capabilities of each interval in addition to the effects of any of claims 17-19.

In summary of the above, the present invention makes the header size smaller in order to reduce the amount of data transferred and reduces the number of signals at channel connection by employing a simplified protocol when performing data communications between a server apparatus and a user terminal, thereby lightening the traffic and reducing overhead, and improving the response of data communications. Therefore, it enables the comfortable use of internet content using devices having roughly the data processing capabilities of a mobile device and through a communication channel having a low data transmission capacity.

### BRIEF DESCRIPTION OF THE DRAWINGS

Fig. 1 is a diagram showing the structure of a communication system according to an embodiment of the present invention.
Fig. 2 is a diagram showing a protocol structure of the same communication system.
Fig. 3 is a diagram showing another protocol structure of the same communication system.
Fig. 4 is a diagram showing the operating sequence prior to packet communications in the same communication system.
Fig. 5 is a diagram showing the operating sequence during packet communications in the same communication system.
Fig. 6 is a diagram showing the operating sequence after packet communications in the same communication system.
Fig. 7 is a diagram comparing the structure of a packet transmitted in TCP/IP communications and the structure of a packet transmitted according to a simplified protocol in the same embodiment.
Fig. 8 is a diagram showing the structure of a packet transmitted in a connection set up request in the same embodiment.
Fig. 9 is a diagram showing the structure of a packet transmitted in acknowledgment response to a connection set up request in the same embodiment.
Fig. 10 is a diagram showing the structure of a packet transmitted during data transmission and reception in the same embodiment, showing the structure of a packet containing actual data and the structure of a packet transmitted in acknowledgment response when a packet containing actual data has been transmitted.
Fig. 11 is a diagram showing an example of the outward appearance of a mobile station contained in the same communication system and a screen of an information display portion when the mobile station is providing the user with information.
Fig. 12 is a diagram showing the format of a TCP segment.
Fig. 13 is a diagram showing the format of an IP datagram.
Fig. 14 is a diagram showing the format of a PPP frame.
Fig. 15 is a diagram showing an operating sequence for the case in which data communications are performed using TCP/IP.
Fig. 16 is a diagram showing the structure of a communication system according to a modification example of the same embodiment.

### DESCRIPTION OF THE PREFERRED EMBODIMENT

The preferable mode for carrying out the present invention shall be described in detail with reference to the attached drawings.

### 1. Structure of Embodiment

### 1.1. System Structure

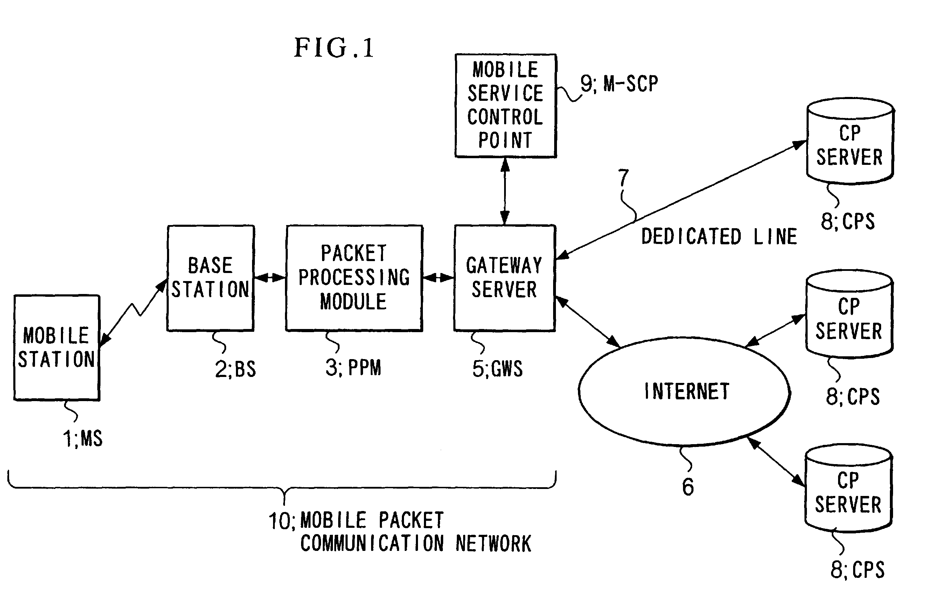

Fig. 1 shows the structure of a communication network system of the present embodiment.

This communication network system comprises MS (Mobile Station) 1, BS (Base Station) 2, PPM (Packet Processing Module) 3, GWS (GateWay Server) 5, CPS (Content Provider Server) 8 connected to GWS 5 via the internet 6 or a dedicated line 7 and M-SCP (Mobile Service Control Point) 9.

BS 2, PPM 3, GWS 5, M-SCP 9 and the communication lines for connecting these form a mobile packet network 10.

MS 1 is a terminal device which receives packet communication services of the mobile packet communication network 10. In addition to being connected to the mobile packet communication network 10 shown in Fig. 1, the MS 1 is connected to a mobile telephone network which is not shown, whereby it is capable of receiving a mobile telephone service.

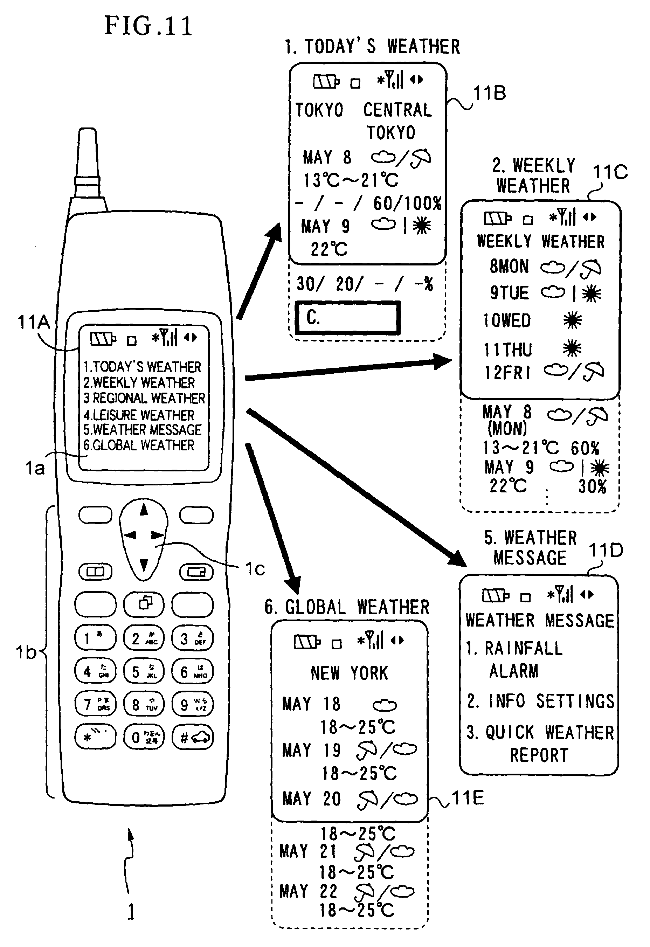

Fig. 11 shows an example of the outward appearance of the MS 1 and a screen displayed on the MS 1. The MS 1 has an audio input/output portion for the user to perform audio communications, a radio portion for performing radio communications with BS 2 (neither are shown), an information display portion 1a comprising a liquid crystal panel or the like, an operating portion 1b for performing information input operations such as number entry or character input, and an internal microcomputer for controlling these portions. Additionally, MS 1 contains software for viewing document data (a so-called browser). This browser is software for displaying a dialog screen based on data in HTML format (hereafter referred to as HTML data) supplied from the CPS 8 possessed by a content providing business via the mobile packet communication network 10.

The MS 1 displays various types of information on the information display portion 1a in accordance with the above-mentioned browser, and provides this information to the user. This information display portion 1a can display 8 (characters) × 6 (lines) of information (it is possible to have more than 8 characters horizontally and more than 6 lines vertically depending on the area of the display portion and the character size).

Next, an example of use of the MS 1 shall be explained with reference to Fig. 11.

First, when the user pushes the "information" key on the operating portion 1b, an initial screen 11A which provides the user information relating to a weather forecast is displayed on the information display portion 1a. By operating a jog dial key 1c in the center of the MS 1, the user can select a weather forecast menu of "1"-"5" in the initial screen.

That is, if the user selects "1", a screen 11B showing today's weather is displayed in the information display portion 1a. If the user selects "2", then a screen 11C showing a weekly weather forecast is displayed on the information display portion 1a. If the user selects "5", then a weather message submenu screen 11D is displayed, from which it is possible to obtain information such as a rainfall alarm or a quick weather report. Furthermore, if the user selects "6", then a world weather forecast screen 11E is displayed.

In this way, text-based information is displayed on the information display portion 1a under control of the browser in a form that is easy for the user of the MS 1 to see.

In Fig. 1, the BS 2 are positioned according to radio zones which divide the ground e.g. into areas having a radius of 500 m, and perform radio communications with MS 1 present in these radio zones.

The PPM 3 is a computer system provided in a packet subscriber switching station accommodating a plurality of BS 2, which receives packet switching requests from the MS 1, and relays packet switching in the mobile packet communication network 10.

The GWS 5 is a computer system provided with a mobile packet gateway switching station for interconnecting the mobile packet communication network 10 with another network such as the internet 6. As shall be explained below, this GWS 5 is for connecting a radio-oriented interval from the MS 1 to itself and a wire-oriented interval from itself to the CPS 8, and performs various types of control to enable packet communications between the MS 1 and CPS 8 by absorbing differences between the simplified protocol (hereafter called TL, a first communication protocol) used in the radio-oriented interval and TCP which is the protocol in the wire-oriented interval.

Additionally, a plurality of the GWS 5 are provided to form a server group, with a proxy server also contained in this server group.

The CPS 8 is a server system operated by the content provider business, and supplies the GWS 5 with the information to be provided to the users in HTML data format via the internet 6 or a dedicated line 7.

Additionally, the GWS 5 itself contains a server for the mobile packet communication network 10 business to provide content.

The M-SCP 9 manages subscriber information and performs processing relating to packet registration when packet communications begin as shall be explained, and packet deregistration when packet communications end.

Billing information for the packet communications are recorded in the PPM 3 and the GWS 5, and transferred at a predetermined timing to a call toll accounting center which is not shown.

### 1.2. Protocol Structure

In the above-described communication system, the devices employ the protocol structures described below in order to perform data communications between the MS 1 and CPS 8.

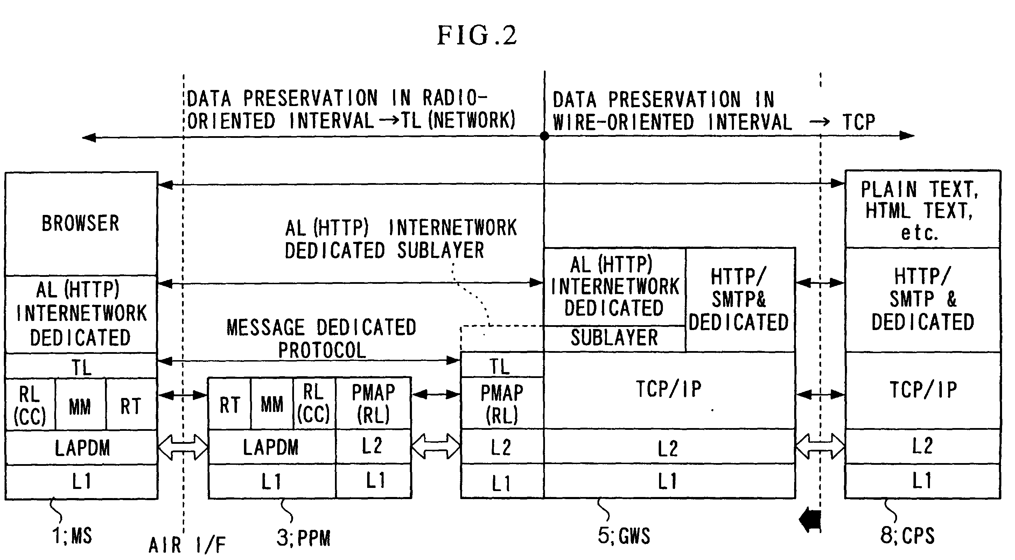

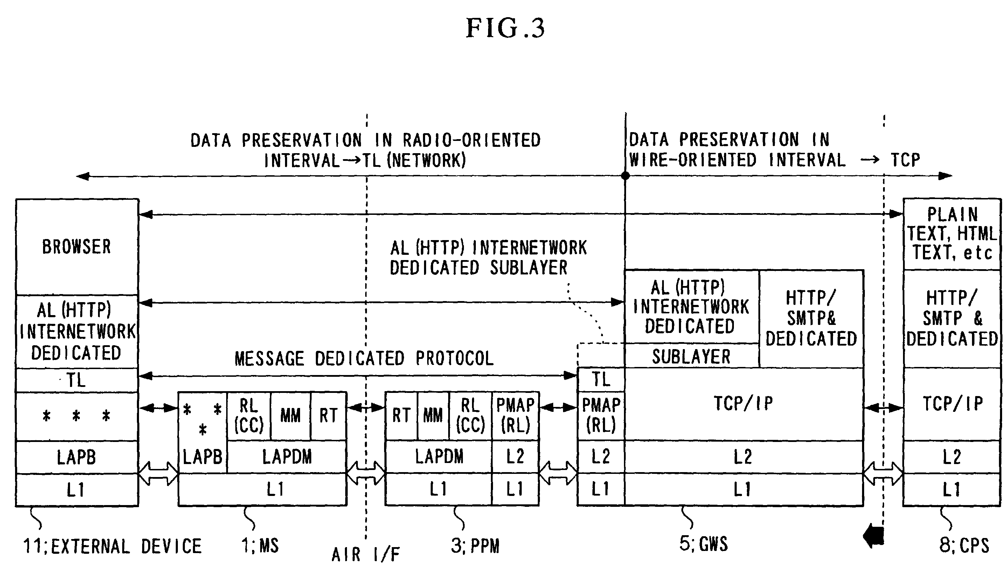

Figs. 2 and 3 express schematically the protocol structure of the present embodiment based on an OSI layer model. Here, Fig. 2 shows a protocol structure for a case where information is received from the CPS 8 by the mobile station alone, and Fig. 3 shows a protocol structure for a case where information is received from the CPS 8 in a structure where an external device 11 such as a portable information terminal or car navigation device is associated therewith.

In the protocol structures shown in Figs. 2 and 3, the left side of the GWS 5, i.e. the PPM 3 and MS 1 (and external device 11) are in the radio-oriented data communication interval, wherein a radio communication protocol and the simplified protocol TL of the present embodiment are used. On the other hand, the right side of the GWS 5, i.e. up to the CPS 8 is a wire-oriented communication interval, wherein the general-purpose protocol TCP/IP (second communication protocol) is used.

Thus, the protocol structure shown in Figs. 2 and 3 shall be described in sequence from the bottom layers based on an OSI layer model.

### 1.2.1. First Layer (Physical Layer)

In Figs. 2 and 3, L1 indicates a physical layer.

In the physical layer protocol of the wire-oriented interval, the used frequencies, transmission power, modulation method, access method and the like are defined in order to ensure that the transmission of bit sequences is performed using communication lines composed of physical media such as dedicated lines, public telephone lines or ISDN.

On the other hand, in the physical layer protocol of the radio-oriented interval, the packet communication channels are defined on the basis of the channel structure of the PDC system, and in particular, the arrangement/structure of physical channels for packet communication and the signal coding method and signal transmission method for transmitting signals using the physical channels for packet communication are defined.

### 1.2.2. Second Layer (Data Link Layer)

In Figs. 2 and 3, L2 indicates a data link layer.

In the data link layer protocol of the wire-oriented interval, the procedures and interface for performing transparent and highly reliable data transmissions between nodes are defined using bit sequence transmission functions provided in the physical layer. Data links are established using PPP as the protocol of this data link layer.

On the other hand, in the data link layer of the radio-oriented interval, LAPDM (Link Access Procedure for Digital Mobile channel) is used between the MS 1 and PPM 3. This LAPDM is one used for physical control channels and physical communication channels with functions added to perform packet communications efficiently so as to enable use on physical channels for packet communications. Furthermore, in the case of Fig. 3, an LAPB (Link Access Procedure Balanced) is used between the MS 1 and the external device 11.

### 1.2.3. Third Layer (Network Layer)

The network layer protocol in the wire-oriented interval is composed of an IP (Internet Protocol). This IP performs routing and supplies HTML data transmitted from the CPS 8 to the GWS 5 via the internet 6.

Additionally, in the radio-oriented interval, PMAP (Packet Mobile Application Part) is used between the PPM 3 and GWS 5. This PMAP is defined as a signal format for transmitting and receiving user packets between nodes in a PDC-P network.

The network layer protocol for communications between the MS 1 and PPM 3 is composed of RT (Radio frequency Transmission management), MM (Mobility Management) and CC (Call Control).

Here, RT achieves functions relating to management of radio resources (including physical channels for packet communications) including such functions as selection of radio zones and as setting, maintenance, switching and disconnection of radio channels, MM achieves functions relating to mobile station movement support including position registration and identification functions, and CC achieves functions relating to channel call connection control including such functions as setting, maintenance and release of calls. The detailed operations of these are described in "Digital Car Telephone System Standards RCR STD-27F".

These functions work cooperatively to perform such control as simultaneous standby control, communication initiation control, packet transfer control, channel switching control, periodic registration control and communication termination control.

### 1.2.4. Fourth Layer (Transport Layer)

The transport layer protocol of the wire-oriented interval is composed of TCP. This is for supplying HTML data transmitted from the CPS 8 to the GWS 5 via the internet 6.

Additionally, the transport layer protocol for communications between the MS 1 and GWS 5 in the radio-oriented interval is composed of the simplified protocol TL. This TL provides a connection-type service for performing highly reliable end-to-end communications, making communications by virtual circuits possible. As a result, higher level applications can provide dialog-type services as if a physical point-to-point link has been established with a communication partner (this is known as a "logical connection"). Additionally, this TL can set up a plurality of logical connections simultaneously. The communication protocol of the mobile packet communication network 10 is composed in such a way that the TL directly resides on the bearer of the mobile packet communication network 10.

### 1.2.5. Fifth Layer (Session Layer)

In the wire-oriented interval, HTTP is used for browser display and SMTP is used for electronic mail distribution on the session layer and presentation layer between the GWS 5 and CPS 8.

Between the MS 1 and GWS 5, communications are performed using HTTP by means of a virtual circuit to be explained below. Additionally, in the application layer, data communications are performed between the MS 1 having a browser and the CPS 8 possessing data of various formats such as plain text, HTML, GIF, and the like.

### 1.2.6. Sixth Layer (Presentation Layer)

Between the MS 1 and GWS 5, the sixth layer is composed of HTTP as an internetwork-dedicated protocol, between the GWS 5 and CPS 8, it is composed of HTTP/SMTP.

### 1.2.7. Seventh Layer (Application Layer)

The application layer of the MS 1 is composed of a browser having the function of internet browsing software, and the application layer of he CPS 8 which provides the user of the MS 1 with various information is composed of data such as plain text, HTML, GIF, and the like.

### 2. Operation of the Embodiment

The overall operating sequence of a communication system including the wire-oriented interval and radio-oriented interval employing a protocol structure of this type shall be explained for the case of performing packet communications. In the following description, the structures of the packets exchanged in the radio-oriented intervals shall be referred to as the occasion demands.

### 2.1. Operating Sequence for Packet Registration

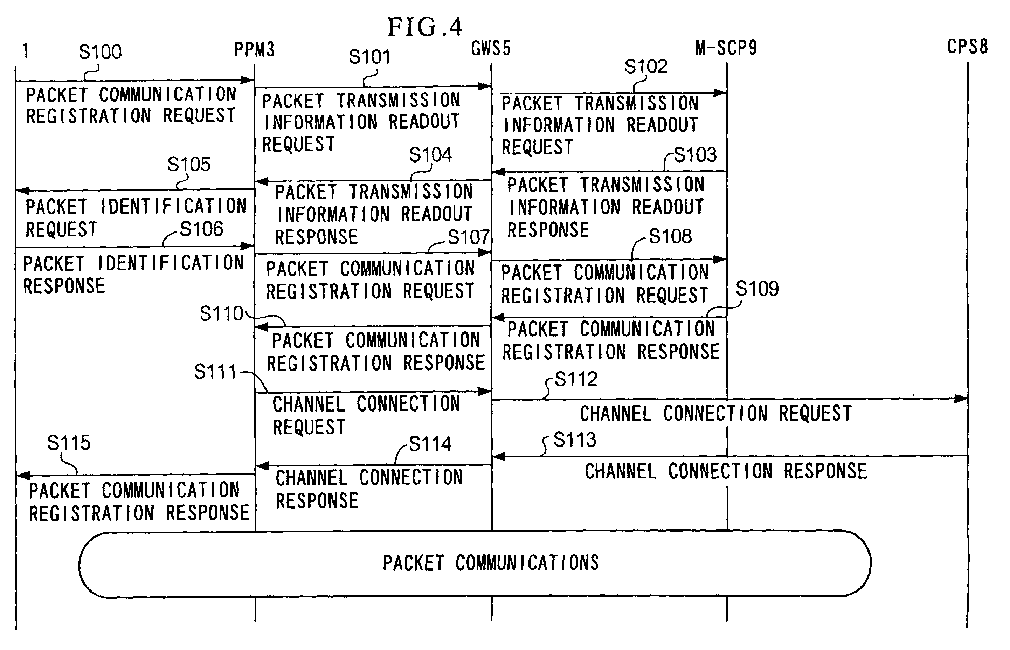

When a user presses the "information" key in MS 1, the operating sequence for packet registration shown in Fig. 4 is executed.

First, a packet communication registration request is issued from the MS 1 side toward the PPM 3 (S100). Upon receiving this, the PPM 3 sends the GWS 5 a signal requesting readout of packet origination information indicating whether or not the packet originator is a packet subscriber (S101). This packet origination information readout request signal is transmitted through the GWS 5 to the M-SCP 9 (S102).

The M-SCP 9 searches for subscriber information corresponding to the originator ID contained in the packet origination information readout request signal to determine whether or not the user of MS 1 is a packet service subscriber, and sends out a packet origination information readout response signal (S103). Then, this packet origination information readout response signal is transmitted through the GWS 5 to the PPM 3 (S104).

Upon receiving this, the PPM 3 sends the MS 1 a packet identification request signal (S105). A response signal with respect to this packet identification request signal is returned from the MS 1 to the PPM 3 (S106).

Next, a packet communication registration request signal requesting registration of packet communications is transmitted from the PPM 3 through the GWS 5 to the M-SCP 9 (S107→ S108). The M-SCP 9 performs registration for initiating packet communication between the MS 1 and the radio transmission system, and returns a packet communication registration response signal to the GWS 5 (S109). Then, this packet communication registration request signal is transmitted from the GWS 5 to the PPM 3 (S110).

Upon receiving this packet communication registration response signal, the PPM 3 sends a channel connection request signal requesting channel connection to the GWS 5 (S111). Receiving this, the GWS 5 sends a channel connection request signal to the CPS 8 (S112), and the CPS 8 returns a channel connection response signal (S113).

Upon receiving the channel connection response signal, the GWS 5 sends the PPM 3 a channel connection request signal (S114), and the PPM 3 sends the MS 1 a packet communication registration response signal (S115).

### 2.2. Operating Sequence during Packet Communications

When this sequence of packet communication registration procedures ends, an initial screen such as shown in the previously mentioned Fig. 11 is shown in the information display portion 1a of MS 1. Then, when the user operates a jog dial key 1c and selects a menu number from the initial screen, packet communications are commenced to display the content of the homepage at the URL linked to that number on the information display portion 1a.

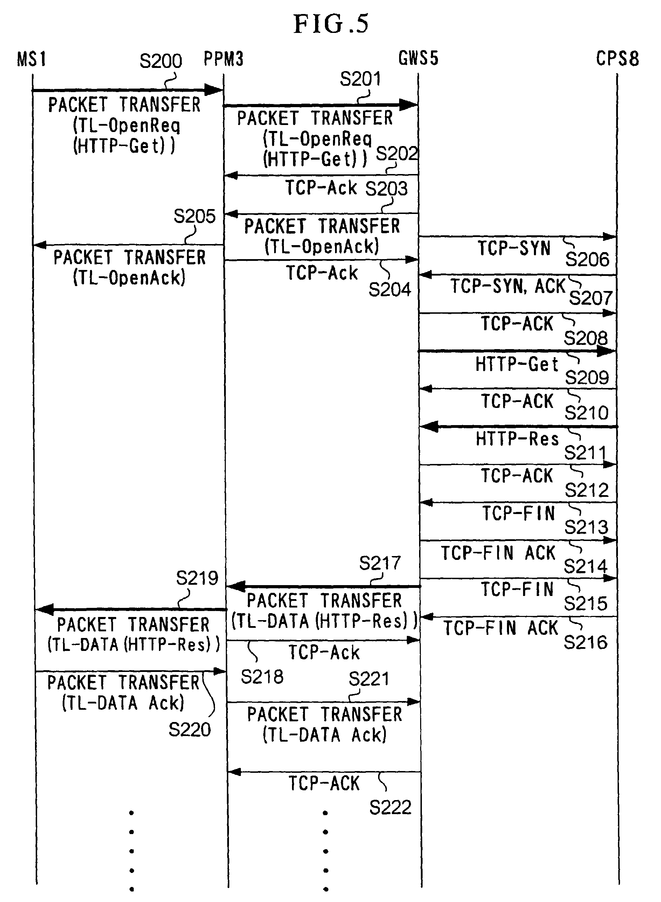

Fig. 5 shows the operating sequence during packet communications.

First, the MS 1 sends out a packet (TL-OpenReq packet; "first packet" in the claims) containing a connection setup request message (Open Request), the URL of the homepage which is to be accessed, and an HTTP-Get method requesting transfer of the data required to display the content of the homepage on the information display portion 1a of the MS 1 (S200).

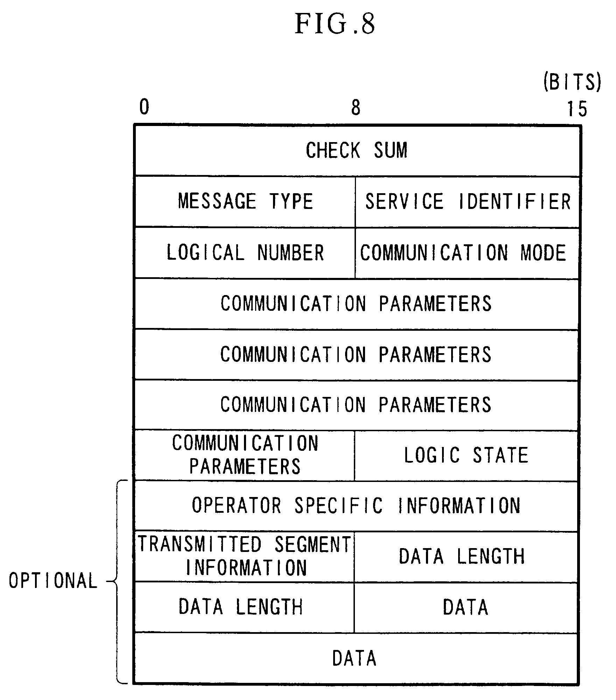

Fig. 8 shows the structure of the TL-OpenReq packet sent when requesting connection setup. In this packet, the field indicating the type of message contains information indicating that the message type is an "Open Request" message, and the field for data contains data for the HTTP-Get method including the above-mentioned URL. The logical number field contains identification numbers for identifying the end-to-end connection established between the MS 1 and GWS 5. The simplified protocol TL in the radio-oriented interval enables a plurality of simultaneous logical connections, each logical connection being identified by means of this logical number. This logical number is set on the mobile station side.

Additionally, the field indicating communication parameters contains the data length and the number of units of data capable of being received at once by the MS 1, as well as information such as timer values for the case where retransmission is to be performed. That is, the MS 1 houses information relating to its own capabilities in the communication parameter field of the transfer packet to be sent to the network side.

This TL-OpenReq packet is sent through the PPM 3 to the GWS 5 (S201). Upon receiving this, the GWS 5 returns a TCP acknowledgment response packet and a packet containing an acknowledgement response message (Open Acknowledge) with respect to the TL Open Request is returned to the PPM 3 (S202, S203).

That is, on the network side, a logical connection setup request message is received, the communication parameter information for the MS 1 side is analyzed, and the communication parameters at logical connection setup are determined and sent out together with the acknowledgment response message (Open Acknowledge).

In this way, with the simplified protocol TL, the capabilities of the partner side (above-mentioned communication parameter values) are negotiated before setting up the logical connection prior to data exchange, so that resources are used efficiently and capacity control is performed by traffic gradients.

Then, a logical connection is established between the MS 1 and the GWS 5 by means of these operations, and the exchange of packet data is completed.

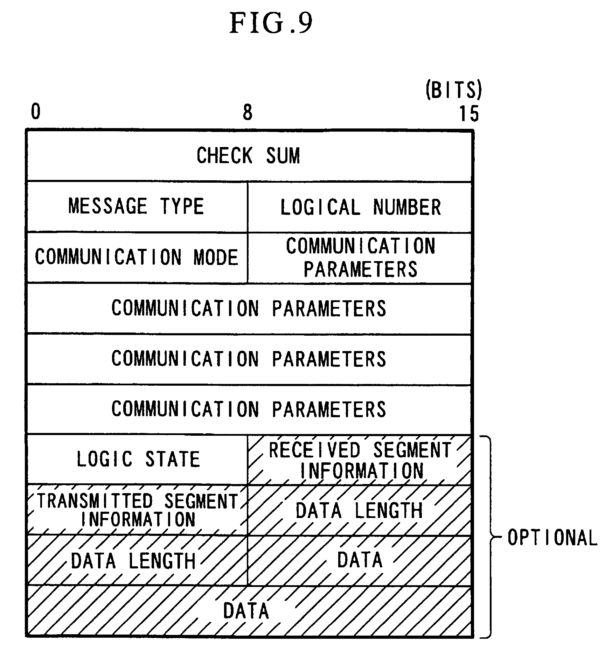

Fig. 9 shows the structure of a TL-OpenAck packet sent as an acknowledgement response to a connection setup request. In this packet, the field indicating the message type contains information indicating that it is an "Open Acknowledge" message, and the logical number field contains logical numbers designated at the time of the connection setup request.

Then, this TL-OpenAck packet is transferred to the mobile station side (S205), and the TCP acknowledgment response packet is transferred from the PPM 3 to the GWS 5 (S204).

On the other hand, the following type of exchange occurs between the GWS 5 which has received the TL-OpenReq packet and the CPS 8 based on the normal TCP operating sequence.

First, in order to establish a connection between the GWS 5 and the CPS 8, a segment to which a SYN flag has been set is sent from the GWS 5 to the CPS 8 (S206), and as an acknowledgment response to indicate that the segment has been received, a segment with an SYN flag and ACK flag is returned from the CPS 8 to the GWS 5 (S207). Then, a segment having an ACK flag is sent from the GWS 5 to the CPS 8 (S208). A connection is established between the GWS 5 and the CP server 8 by means of this Three Way Handshake procedure.

Next, an HTTP-Get segment containing the URL of the target homepage (obtained from MS 1 in step S201) is transmitted from the GWS 5 to the CP server 5 (S209), and the CPS 8 returns an acknowledgment response signal indicating that the segment has been received to the GWS 5 (S210).

Then, an HTTP-Res segment containing data from the homepage in CPS 8 designated by the URL is transmitted from the CPS 8 to the GWS 5 (S211), and a segment with an ACK flag indicating that the segment has been received is returned from the CPS 8 (S212).

When data transfer by the HTTP ends, the following type of connection termination process is performed.

First, a segment set up with a FIN flag is sent from the CPS 8 to the GWS 5 (S213). The GWS 5 returns an acknowledgment response segment indicating that this segment has been received (S214). Then, this time, a similar connection termination process is performed from the GWS 5 (S215, S216).

By means of this sequence composed of the 11 steps of steps S206-S216, data from the homepage in the CPS 8 is supplied to the GWS 5.

Next, a packet (TL-DATA packet) containing data from the homepage in CPS 8 supplied to the GWS 5 is transferred to the PPM 3 (S217).

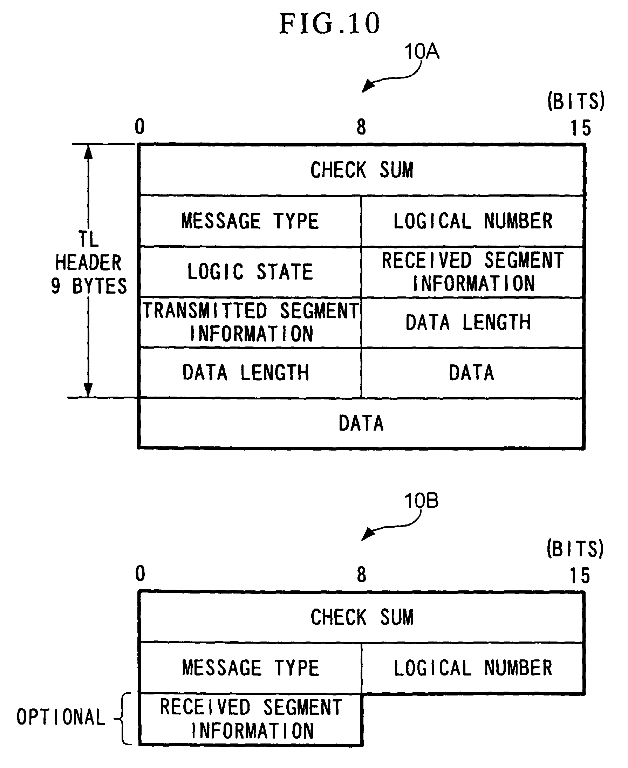

In Fig. 10, this packet is indicated as packet 10A, and its structure is shown. In this packet 10A, the field indicating the message type contains information indicating that the message type is a "Data" message, and the data field contains the data from the homepage in the CPS 8.

A TCP acknowledgment response packet indicating that this packet has been received is returned from the PPM 3 to the GWS 5 (S218). Then, the TL-DATA packet transferred to the PPM 3 is transferred to the MS 1 (S219). As a result, data from the homepage designated by the user is transferred to the MS 1, and the content corresponding to the number selected from the initial screen by the user is displayed on the information display portion 1a.

Then, the MS 1 returns an acknowledgment response packet (TL-DATA Ack packet) indicating that the TL-DATA packet has been received to the PPM 3 (S220).

In Fig. 10, this packet is shown as packet 10B, and its structure is shown. In this packet 10B, the field indicating the message type contains information indicating that the message type is "Data Acknowledge".

The packet returned to the PPM 3 is transferred to the GWS 5 (S221), and a TCP acknowledgment response packet indicating that this packet has been received is returned to the PPM 3 (S222).

While the example explained above is one wherein data transfer ends after a single packet transfer from the CPS 8 to the MS 1, in actual practice, the sequences between the PPM 3 and GWS 5 (S217, S218, S221, S222) and the sequences between the MS 1 and PPM 3 (S219, S220) are repeatedly performed in accordance with the amount of data supplied from the CPS 8. That is, if the amount of data supplied from the CPS 8 is 3 times the maximum amount of data capable of being received at once on the MS 1 side, then the data is transferred to the MS 1 side in 3 divisions, and the processes of steps S217, S218, S221 and S222, and steps S219 and S220 are performed 3 times.

### 2.3. Operating Sequence at Packet Communication Termination

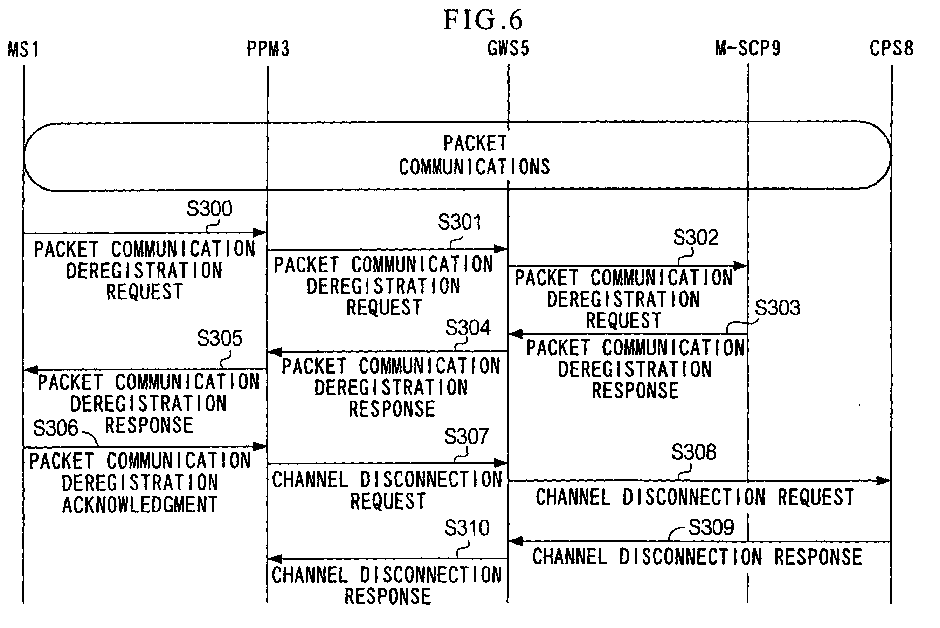

Fig. 6 shows the operating sequence at the time of packet communication termination.

First, a signal which requests deregistration from packet communications is transmitted from the MS 1, through the PPM 3 and GWS 5 to the M-SCP 9 (S300 → S301 → S302). The M-SCP 9 deregisters MS 1 from packet communications, and sends a packet communication deregistration signal (S303). This packet communication deregistration signal is transmitted via the GWS 5 and PPM 3 to the MS 1 (S304 → S305), and upon receiving it, the MS 1 sends the PPM 3 a response signal with respect to the packet communications deregistration signal (S306).

Next, the PPM 3 sends the GWS 5 a signal requesting disconnection of the channel (S307), and the GWS 5 sends the CPS 8 the channel disconnection request signal (S308). Upon receiving this, the CPS 8 sends the GWS 5 a channel disconnection response signal (S309), and the GWS 5 sends the PPM 3 a channel disconnection response signal (S310), thus ending the sequence performed at packet communications termination.

### 3. Effects of the Embodiment

(1) In this way, by comparing the conventional sequence using PPP, IP and TCP shown in Fig. 15 with the sequence using TL between the MS 1 and GWS 5 shown in Fig. 5 of the present embodiment, it is possible to largely reduce (to about 1/3) the number of signals exchanged between the transmitting side and the receiving side, and to smoothly perform data communications even if the hardware specs (CPU processing power, memory capacity, etc.) of the MS 1 are not very high.
(2) Additionally, as shown in Fig. 7, the structure of the packet 7B transferred in the present embodiment is considerably simplified. That is, in communications by the simplified protocol TL, each packet is composed of a header of approximately 10 bytes (called the TL header) and application data (e.g. 500 bytes, expandable to a maximum of 1400 bytes). Consequently, the header size is largely reduced (to about 1/5) in comparison to convention packets 7A using TCP/IP. As a result, the amount of transferred data is reduced and the communication cost is also lowered.

### 4. Examples of Modifications

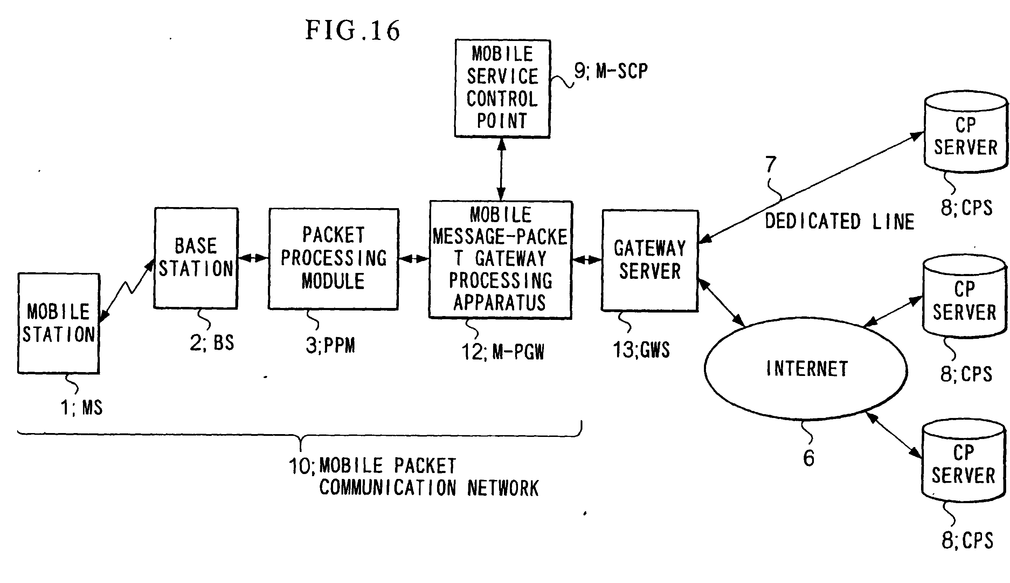

The present invention is not restricted to the above-described embodiment, and various modifications such as the examples given below are possible.
(1) While data communications downstream with respect to the network was described in the present embodiment from the viewpoint of the user of a mobile station receiving data distributions from a CP server, it is also possible to transfer data according to the communication protocol (TL) described in the present embodiment in data communications upstream. That is, data communications by TL are possible in cases where electronic mail is to be transmitted to a partner terminal connected to the internet.
(2) The communication protocol (TL) described in the present embodiment is no more than a single example of a simplified protocol. It can be any protocol that does not have a high signal number such as the conventional TCP/IP, is connected to the communication partner by a virtual circuit at the transport layer level, and allows for connection-type communications.
(3) The structure of the packets and content of the information elements described in the present embodiment are only examples, and may be of any type which allows the header size to be made smaller and enables smooth data communications between the user terminal and the relay apparatus.
(4) The format of the data distributed from the CP server does not need to be HTML, and other formats may be employed. For example, if the distributed information is only text data, then it does not have to be a data format which uses browser-compatible tags such as HTML.
(5) The GWS 5 can be composed of a plurality of devices, such as to spread the load and traffic on the GWS 5. For example, as shown in Fig. 16, it can be separated into an M-PGW (Mobile Message-Packet Gateway Module) 11 and a GWS 13, such that the GWS 13 performs relay processes between the mobile packet communications network 10 and external communication paths, and the M-PGW 12 performs other processes. Additionally, it is possible to provide a plurality of M-PGW 11 and connect each M-PGW 11 to the GWS 13, so as to spread the load and traffic on each M-PGW.

## Claims

1. A communication control method in a relay apparatus for relaying data communications between a server apparatus and a user terminal, comprising:
a step of receiving a packet containing a message requesting establishment of a connection with the server apparatus and an identification number for the connection sent from the user terminal according to a first communication protocol which is a protocol;
a step of transmitting a packet containing an acknowledgment response message that the packet has been received to the user terminal according to the first communication protocol, and establishing a connection between the server apparatus and itself according to a second communication protocol;
a step of receiving a packet containing a data transfer request message transmitted from the user terminal to the server apparatus according to the first communication protocol, and transmitting a packet containing this data transfer request message to the server apparatus according to the second communication protocol; and
a step of receiving data transmitted from the server apparatus according to the second communication protocol and transmitting a packet containing this data to the user terminal according to the first communication protocol;
wherein the first communication protocol is simpler than the second communication protocol.

2. A communication control method in a relay apparatus for relaying data communications between a server apparatus and a user terminal, comprising:
a step of receiving a packet containing a message requesting establishment of a connection to the server apparatus, an identification number for the connection and a data transfer request message for the server apparatus transmitted from the user terminal according to a first communication protocol;
a step of transmitting a packet containing an acknowledgment response message that the packet has been received to the user terminal according to the first communication protocol, establishing a connection between the server apparatus and itself according to a second communication protocol, and transmitting a packet containing the data transfer request message to the server apparatus; and
a step of receiving data transmitted from the server apparatus according to the second communication protocol and transmitting a packet containing this data to the user terminal according to the first communication protocol;
wherein the first communication protocol is simpler than the second communication protocol.

3. A communication control method according to claim 1 or 2, wherein the number of signals used in establishing the connection between the user terminal and the relay apparatus according to the first communication protocol is less than the number of signals used in establishing the connection between the relay apparatus and the server apparatus according to the second communication protocol.

4. A communication control method according to claim 1 or 2, wherein a communication interval between the user terminal and the relay apparatus is composed of a radio-oriented interval, and a communication interval between the relay apparatus and the server apparatus is composed of a wire-oriented interval.

5. A communication method for performing data communications between a server apparatus and a user terminal, wherein communication control procedure in an upper layer containing a transport layer in the data communications comprises:
a first step of transmitting a first packet containing a message requesting establishment of a connection and an identification number for the connection from the user terminal to the server apparatus;
a second step of transmitting a second packet containing an acknowledgment response message that this first packet has been received from the server apparatus to the user terminal; and
a third step of transmitting a third packet containing actual data to the user terminal by designating the identification number from the server apparatus after the connection has been established between the user terminal and the server apparatus.

6. A communication method for performing data communications between a user terminal and a relay apparatus for relaying data communications between the user terminal and a server apparatus, wherein communication control procedure in an upper layer containing a transport layer in the data communications comprises:
a first step of transmitting a first packet containing a message requesting establishment of a connection and an identification number for the connection from the user terminal to the relay apparatus;
a second step of transmitting a second packet containing an acknowledgment response message that this first packet has been received from the relay apparatus to the user terminal; and
a third step of transmitting a third packet containing actual data supplied to the relay apparatus according to a predetermined protocol from the server apparatus to the user terminal by designating the identification number after the connection has been established between the user terminal and the relay apparatus.

7. A communication method according to claim 5, wherein
in the first step, the user terminal transmits data size information indicating the maximum size of data that it is capable of receiving at once to the server apparatus; and
the server apparatus obtains the maximum size from the data size information which has been received, and divides the actual data for transmission to the user terminal if the size of the third packet exceeds the maximum size.

8. A communication method according to claim 6, wherein
in the first step, the user terminal transmits data size information indicating the maximum size of data that it is capable of receiving at once to the relay apparatus; and
the relay apparatus obtains the maximum size from the data size information which has been received, and divides the actual data for transmission to the user terminal if the size of the third packet exceeds the maximum size.

9. A server apparatus for performing data communications with a user terminal, comprising:
communication control means for performing communication control at an upper layer level containing a transport layer when performing the data communications;
the communication control means comprising:
means for receiving a first packet containing a message requesting establishment of a connection and an identification number for the connection transmitted from the user terminal;
means for transmitting a second packet containing an acknowledgment response message that this first packet has been received to the user terminal; and
means for transmitting a third packet containing actual data to the user terminal by designating the identification number after the connection has been established with the user terminal.

10. A relay apparatus for relaying data communications between a server apparatus and a user terminal, comprising:
communication control means for performing communication control at an upper layer level containing a transport layer when performing the data communications;
the communication control means comprising:
means for receiving a first packet containing a message requesting establishment of a connection and an identification number for the connection transmitted from the user terminal;
means for transmitting a second packet containing an acknowledgment response message that this first packet has been received to the user terminal; and
means for transmitting a third packet containing actual data supplied from the server apparatus to the relay apparatus according to a predetermined protocol to the user terminal by designating the identification number after the connection has been established between the user terminal and itself.

11. A relay apparatus for relaying data communications between a server apparatus and a user terminal, comprising:
means for receiving a packet containing a message requesting establishment of a connection with the server apparatus and an identification number for the connection transmitted from the user terminal according to a first communication protocol;
means for transmitting a packet containing an acknowledgment response message that the packet has been received to the user terminal according to the first communication protocol, and establishing a connection between the server apparatus and itself according to a second communication protocol;
means for receiving a packet containing a data transfer request message transmitted from the user terminal to the server apparatus according to the first communication protocol, and transmitting a packet containing this data transfer request message to the server apparatus according to the second communication protocol; and
means for receiving data transmitted from the server apparatus according to the second communication protocol and transmitting a packet containing this data to the user terminal according to the first communication protocol;
wherein the first communication protocol is simpler than the second communication protocol.

12. A relay apparatus for relaying data communications between a server apparatus and a user terminal, comprising:
means for receiving a packet containing a message requesting establishment of a connection to the server apparatus, an identification number for the connection and a data transfer request message for the server apparatus transmitted from the user terminal according to a first communication protocol;
means for transmitting a packet containing an acknowledgment response message that the packet has been received to the user terminal according to the first communication protocol, establishing a connection between the server apparatus and itself according to a second communication protocol, and transmitting a packet containing the data transfer request message to the server apparatus; and
means for receiving data transmitted from the server apparatus according to the second communication protocol and transmitting a packet containing this data to the user terminal according to the first communication protocol;
wherein the first communication protocol is simpler than the second communication protocol.

13. A relay apparatus according to claim 11 or 12, wherein the number of signals used in establishing the connection between the user terminal and the relay apparatus according to the first communication protocol is less than the number of signals used in establishing the connection between the relay apparatus and the server apparatus according to the second communication protocol.

14. A relay apparatus according to any one of claims 10-12, wherein a communication interval between the user terminal and the relay apparatus is composed of a radio-oriented interval, and a communication interval between the relay apparatus and the server apparatus is composed of a wire-oriented interval.

15. A communication system, wherein a user terminal and a server apparatus are connected via a relay apparatus according to any one of claims 10-12.

16. A terminal device for performing data communications with a server apparatus, comprising:
communication control means for performing communication control on an upper layer level containing a transport layer when performing the data communications;
the communication control means comprising:
means for transmitting a first packet containing a message requesting establishment of a connection and an identification number for the connection;
means for receiving a second packet containing an acknowledgment response message that the first packet has been received transmitted from the server apparatus; and
means for receiving a third packet containing actual data transmitted from the server apparatus by designating the identification number after the connection has been established with the server apparatus.

17. A terminal device for performing data communications with a server apparatus via a relay apparatus for managing a connection with the terminal device, comprising:
communication control means for performing communication control on an upper layer level containing a transport layer when performing the data communications;
the communication control means comprising:
means for transmitting a first packet containing a message requesting establishment of a connection with the relay apparatus and an identification number for the connection;
means for receiving a second packet containing an acknowledgment response message that the first packet has been received transmitted from the relay apparatus; and
means for receiving a third packet containing actual data supplied from the server apparatus to the relay apparatus according to a predetermined protocol and transmitted from the relay apparatus by designating the identification number after the connection has been established between the relay apparatus and itself.

18. A terminal device for performing data communications with a server apparatus via a relay apparatus for managing a connection with the terminal device, comprising:
means for transmitting a packet containing a message requesting establishment of a connection with the server apparatus and an identification number for the connection according to a first communication protocol;
means for receiving a packet containing an acknowledgment response message that the packet has been received transmitted from the relay apparatus according to the first communication protocol;
means for transmitting a packet containing a data transfer request message to the server apparatus according to the first communication protocol; and
means for receiving according to the first communication protocol a packet containing actual data supplied from the server apparatus to the relay apparatus according to a second communication protocol in response to the data transfer request message;
wherein the first communication protocol is simpler than the second communication protocol.

19. A terminal device for performing data communications with a server apparatus via a relay apparatus for managing a connection with the terminal device, comprising:
means for transmitting a packet containing a message requesting establishment of a connection with the server apparatus, an identification number for the connection and a data transfer request message for the server apparatus according to a first communication protocol;
means for receiving a packet containing an acknowledgment response message that this packet has been received transmitted from the relay apparatus according to the first communication protocol; and
means for receiving according to the first communication protocol a packet containing actual data supplied from the server apparatus to the relay apparatus according to a second communication protocol in response to the data transfer request message;
wherein the first communication protocol is simpler than the second communication protocol.

20. A terminal device according to claim 18 or 19, wherein the number of signals used in establishing the connection between the user terminal and the relay apparatus according to the first communication protocol is less than the number of signals used in establishing the connection between the relay apparatus and the server apparatus according to the second communication protocol.

21. A terminal device according to any one of claims 17-19, wherein a communication interval between the user terminal and the relay apparatus is composed of a radio-oriented interval, and a communication interval between the relay apparatus and the server apparatus is composed of a wire-oriented interval.
